# EUROPEAN PATENT APPLICATION

(11) **EP 3 119 129 A1**
(43) Date of publication of application: **18.01.2017**
(21) Application number: 15290189.8
(22) Date of filing: 17.07.2015
(51) Int. Cl.: H04W 48/04

(54) **A WIRELESS DEVICE WITH LOCATION-BASED PROBING**

(71) Applicant: ALCATEL LUCENT, 92100 Boulogne-Billancourt (FR)
(72) Inventor: Vanderhulst, Geert, 2018 Antwerpen (BE); Mashhadi, Afra, Dublin (IE); Kawsar, Fahim, 2018 Antwerpen (BE)
(74) Representative: Plas, Axel Ivo Michel

(57) **Abstract**

A wireless communication device (100) memorizes a list (121) of identifiers of access points (AP1, AP2, AP3, AP4, AP5) whereto connection was established previously. The wireless communication device (100) memorizes in relation to such access points (AP1, AP2, AP3, AP4, AP5) location information (LOC1, LOC1, LOC2, LOC3, LOC3) indicative for the location of the access point (AP1, AP2, AP3, AP4, AP5). When broadcasting probe request messages to establish wireless connectivity with an available access point, the wireless communication device 100) compares its current location (LOC3) with the location information (LOC1, LOC1, LOC2, LOC3, LOC3) memorized and contains in the probe request messages only identifiers of access points (AP4, AP5) out of the list (121) whose location (LOC3, LOC3) is within a certain limit of the current location (LOC3) of the wireless communication device (100).

## Description

### Technical Field

The present invention generally relates to active probing, i.e. a technique applied by wireless communication devices like tables, smartphones, multimedia players such as iPODs, game consoles, notebooks, laptops, etc., to establish connectivity with a wireless access point, e.g. a WiFi access point.

### Background

Establishing connectivity between a wireless communication device and an access point of a wireless network generally relies on two different techniques: passive scanning or active probing.

Passive scanning requires the client device, i.e. the wireless communication device that desires to establish connectivity to a wireless network, to pick up signalling that is broadcasted by access points of wireless networks. WiFi access points for instance broadcast so called beacon frames at regular time intervals, typically every 100 milliseconds, to advertise their presence. A wireless communication device can listen for such beacon frames broadcasted by nearby wireless access points, and decide to establish connectivity with one of the access points either automatically or upon instruction of the user of the wireless communication device.

Passive scanning is disadvantageous because it is a slow procedure. The wireless communication device has to scan all channels for a certain time interval. In case of WiFi for instance, the wireless communication device has to successively tune to each WiFi channel and listen at least during a typical beacon interval of 100 milliseconds for presence of a beacon frame in order to establish a complete list of available WiFi access points for connectivity. The passive scan procedure consequently may take several seconds.

In addition, passive scanning has as disadvantage that it does not enable to establish connectivity with wireless access points that do not advertise their presence. Indeed, hidden access points that do not broadcast beacon frames or similar signalling to advertise their presence cannot be detected through passive scanning. Even wireless communication devices that are allowed to connect to such hidden access points cannot detect the availability of such access points through passive scanning and consequently must deploy an alternate technique to establish connectivity.

In the second technique, named active probing, the wireless communication device maintains a list of wireless access points where it previously connected to. The wireless communication device for instance memorizes the SSID or Service Set Identifier of each WiFi access point where it connects to. The wireless communication device further regularly broadcasts a probe request, i.e. a message containing the memorized identifiers of all access points where it previously connected to. Access points listen to such probe requests and in reply to a probe request that contains its identification, an access point transmits a probe response, i.e. a message containing an invitation for the wireless communication device to connect.

Although active probing is faster than passive scanning and also enables to establish connectivity with a hidden access point, active probing is disadvantageous because it is power intensive. The probe request messages must be broadcasted over all channels, e.g. on each WiFi channel. The longer the list of memorized access points, the more data must be transmitted on each channel by the wireless communication device's radio IC and the more energy will be consumed by the wireless communication device. Even while a connection is established with an access point, probe request messages are transmitted, albeit typically at a reduced rate, in order to detect access points with a stronger signal and switch to such access point with stronger signal. Active probing consequently reduces the time in between battery load cycles of wireless communication devices, increases battery deterioration as a result of which batteries must be replaced faster (reduced lifetime), and increases the energy consumption by wireless communication devices resulting in enhanced costs for the user, reduced user experience, and negative impact on environment.

Active probing is further disadvantageous because it is privacy invasive. The probe request messages that contain identifiers of all access points where a wireless communication device previously connected to, are not encrypted. In case of WiFi for instance, this implies that any WiFi enabled device can listen for these probe request messages and interpret them to obtain information on all access points where a given wireless communication device previously connected to. Lots of identifiers such as WiFi SSIDs reveal sensitive information such as links with a company (e.g. Alcatel-Lucent Visitor, Alcatel-Lucent VPN, etc.), locations visited by the wireless communication device (e.g. Hilton NY WiFi, Brussels Airport Guest, etc.), or identities of people in personal hotspots (e.g. Bob Fisher's Network, etc.). Often, the user of a wireless communication device is not aware of the fact that sensitive information such as location, company or people visit is advertised, even long time after he/she has visited such company/location/person, either local or remote, e.g. abroad.

### Summary

It is an objective of the present invention to disclose embodiments of a wireless communication device and active probing method that reduce the above identified shortcomings of existing active probing techniques and avoid the above mentioned drawbacks of passive scanning. More particularly, it is an objective of the present invention to improve the efficiency, i.e. the power consumption, and to reduce the privacy issues of active probing in wireless communication devices.

Embodiments of the invention disclose a wireless communication device as defined by claim 1, comprising:
- an active probing module configured to memorize a list of identifiers of access points whereto the wireless communication device already established connection;
- a wireless interface configured to regularly broadcast probe request messages containing identifiers of access points out of the list memorized by the active probing module; and
- a location determination unit configured to determine a current location of the wireless communication device,
   wherein:
- the active probing module is further configured to memorize in relation to each access point in the list location information indicative for the location of the access point;
- the wireless communication device further comprises a location correlator adapted to compare the current location of the wireless communication device with the location information memorized by the active probing module; and
- the active probing module is further adapted to contain in the probe request messages only identifiers of access points out of the list whose location is within a certain limit of the current location of the wireless communication device.

Thus, the invention concerns location based active probing wherein the wireless communication device broadcasts probe requests that contain only identifiers of access points that are likely nearby. The amount of data incorporated in probe request messages is reduced substantially this way, hence reducing also the energy consumption of wireless communication devices that apply active probing. Instead of for instance 15 identifiers of wireless access points where the user device previously connected to, a probe request shall contain only two identifiers of access points where the user device previously connected to when it was at a location in the vicinity of the current location of the user device. The wireless communication device therefore must be able to memorize its location whenever it connects to an access point and stores the access point identifier, and must be able to determine its current location and to correlate its current location with the stored locations at which it previously established connectivity with wireless access points. Such correlation of locations can be implemented in an energy-efficient manner as will be explained further in this patent application. Location based active probing in accordance with the present invention further significantly improves the privacy issues of traditional active probing. As only the identifiers of nearby access points where the user device previously connected to are contained in the unencrypted, broadcasted probe request messages, sensitive information on companies/places/persons visited remote from the user device's current location is no longer advertised. The location based active probing underlying the present invention consequently is more efficient and less privacy invasive than traditional active probing, but still enables to connect to hidden wireless access points and remains faster than passive scanning since it does not require to scan beacon information that may be broadcasted by wireless access points on any available channel.

Optionally, in an embodiment of the wireless communication device according to the present invention, defined by claim 2:
- the location information indicative for the location of the access point corresponds with a cell identifier of a cell in a wireless cellular network wherein the wireless communication device was present at the time the connection was established; and
- the current location of the wireless communication device corresponds with a cell identifier of a cell in the wireless cellular network wherein the wireless communication device is currently present.

Indeed, a first embodiment of the present invention may rely on cell identifiers or cellular tower identifiers as coarse location information at a point in time connectivity is established with for instance WiFi access points. This first embodiment assumes that a continuous or nearly-continuous connectivity with a cellular network such as GSM, UMTS, 3G or 4G cellular network, exists. This is for instance the case when the wireless communication device is a smartphone or tablet equipped with a SIM card. By comparing the cell identifier of a cell tower where the wireless communication device is currently connected to with all cell identifiers stored by the active probing module in relation to access points where it previously connected to, the wireless communication device can establish a list of wireless access points that are located within the range of the cell tower currently connected to and embed only the identifiers of those access points in the probe requests that are broadcasted. Such re-use of the cell identifiers does not require additional cellular scanning and does not require the presence of alternate technology such as for instance GPS to determine the mobile communication device's location. The first embodiment consequently relies on an energy-efficient technical solution to correlate an access point's location and the wireless communication device's current location and therefore further contributes to the efficiency of active probing in terms of power consumption.

In a second embodiment of the wireless communication device according to the present invention, as defined by claim 3, the location information indicative for the location of the access point and/or the current location are/is one or more of:
- Global Positioning System or GPS coordinates;
- Galileo coordinates;
- GLObal'naya NAvigatsionnaya Sputnikovaya Sistema or GLONASS coordinates;
- Beidou coordinates;
- a Bluetooth beacon or iBeacon; and
- triangulation based coordinates.

Thus, the second embodiment of the present invention may use one or several positioning technologies that are available within the wireless communication device to determine the location of the mobile communication device each time a wireless connection is established with an access point and the memorized list of access points for active probing is updated, and it may use one or several of those positioning technologies to determine the current position of the wireless communication device and select which access point identifiers to embed in a probe request message that will be broadcasted. Positioning aids such as GPS satellites or iBeacon nodes can be used on most smartphones or tablets for localization purposes. Each of these technologies has its own advantages and disadvantages: iBeacons for instance perform well for indoor positioning within limited ranges and consume little energy, satellite based technologies such as GPS have global coverage for accurate outdoor positioning but must be enhanced or complemented with other techniques such as GPS triangulation for indoor positioning, etc.

According to an optional aspect defined by claim 4, in embodiments of the wireless communication device according to the present invention:
- the active probing module is further adapted to memorize a blacklist of locations;
   and
- the active probing module is further adapted to interrupt broadcasting the probe request messages whenever the current location of the wireless communication device corresponds to a location within the blacklist.

Thus, the location based active probing may be disabled automatically depending on the wireless communication device's current location. This way, broadcasting probe requests including privacy sensitive information may be prevented for instance at crowded public places such as airports, hotels, etc., where privacy might play a more important role and the user may prefer his wireless communication device to prevent leaking any data at all.

According to a further optional aspect of the wireless communication device according to the present invention, as defined by claim 5:
- the active probing module is adapted to memorize a white list of locations; and
- the active probing module is further adapted to broadcast a generic probe request message whenever the current location of the wireless communication device corresponds to a location within the white list, the generic probe request message containing no identifiers of access points to enable any access point to respond.

Thus, a generic probe request message containing no access point identifier could be broadcasted at a particular location or at particular locations maintained in a white list of locations. At such location(s), any access point that picks up the probe request message may respond with an invitation to connect.

Further optionally, as defined by claim 6, embodiments of the wireless communication device according to the present invention may comprise:
- a passive scanning module configured to listen to signalling broadcasted by nearby access points to advertise their presence; and
- the passive scanning module being configured to memorize one or more location; and
- the passive scanning module further being configured to enable or disable listening to the signalling when the current location of the wireless communication device corresponds to a location memorized.

Thus, similar to location based active probing, a wireless communication device according to the present invention could also implement location-based passive scanning. Although passive scanning poses no privacy issues, energy consumption can be reduced by enabling the passive scanning for signalling, e.g. WiFi beacon frames, only at particular locations, or by disabling the passive scanning at particular locations that are maintained in the wireless communications device.

According to an optional aspect of the wireless communication device according to the present invention, defined by claim 7, the certain limit corresponds to a predetermined distance threshold.

Indeed, the access points that are advertised in a probe request broadcasted by the wireless communication device may be selected based on the distance between the current location of the wireless communication device and the location where previous connectivity was established with the access point. Only identities of access points for which this distance stays below a certain distance threshold, e.g. 500 meters, will be contained in the probe request message. To be able to calculate the distance, the location coordinates of the current location and the location where previous connectivity was established must be available. This is for instance the case when GPS is used as localization technology.

According to an optional aspect of the wireless communication device according to the present invention, defined by claim 8, the certain limit corresponds to the same cell in a wireless cellular network wherein the wireless communication device is present.

Indeed, in an embodiment of the invention where the cellular tower identifier is maintained as location identifier, correspondence of the cellular identifier where the wireless communication device currently connects to with the cellular identifier where the wireless communication device was connected to when previous connection was established with an access point, may be used as criterion to select the access points whose identifiers will be advertised in a newly broadcasted probe request. This criterion has as advantage that no distance calculations are required. Only a match between cellular identifiers must be verified.

In addition to a wireless communication device as defined by claim 1, embodiments of the present invention also concern a wireless communication method as defined by claim 9, the method comprising:
- memorizing a list of identifiers of access points whereto a wireless communication device previously established connection;
- regularly broadcasting probe request messages containing identifiers of access points out of the list memorized by the wireless communication device;
- determining a current location of the wireless communication device,
- memorizing in relation to each access point in the list location information indicative for the location of the access point;
- comparing the current location of the wireless communication device with the location information memorized; and
- containing in the probe request messages only identifiers of access points out of the list whose location is within a certain limit of the current location of the wireless communication device.

### Brief Description of the Drawings

Fig. 1 is a functional block diagram of an embodiment of the wireless communication device 100 according to the present invention; and
Fig. 2 shows a computing system suitable for hosting certain modules of the wireless communication device according to the present invention and suitable for implementing certain steps of the wireless communication method according to the present invention.

### Detailed Description of Embodiment(s)

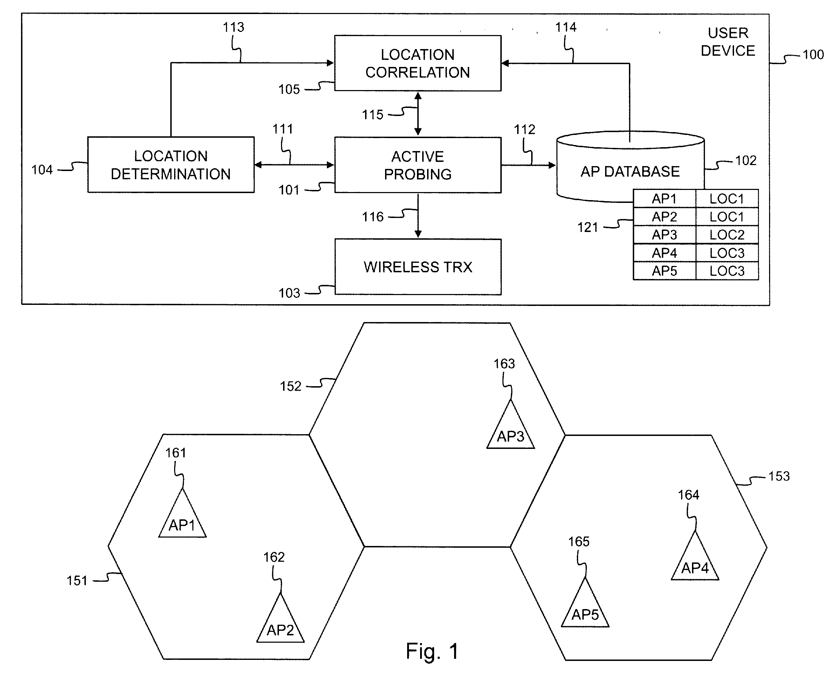

Fig. 1 shows a wireless communication device, USER DEVICE 100, e.g. a smartphone. The user device 100 is equipped with an active probing module 101 that connects that connects with an access point memory 102, and a wireless transceiver 103, e.g. a WiFi transceiver. The user device 100 further has a location determination unit 104, e.g. a GPS receiver, and a location correlation module 105 that connects with the location determination unit 104 and the access point memory 102. Although not drawn in Fig. 1 and not mandatory for the present invention, it is assumed that user device 100 also features a wireless cellular transceiver, e.g. a GSM transceiver. The wireless cellular transceiver provides continuous connectivity to a cellular network that comprises cellular towers each covering a limited geographical area or so called cell. In Fig. 1, 151, 152 and 153 represent three cells of the cellular network where user device 100 connects to. The respective cellular towers of these three cells are not drawn in Fig. 1.

Fig. 1 further shows five wireless access points, AP1 or 161, AP2 or 162, AP3 or 163, AP4 or 164 and AP5 or 165. Access points 161 and 162 are geographically, located in the cell 151, access point 163 is geographically located in cell 152, and access points 164 and 165 are geographically located in cell 153. These five wireless access points constitute WiFi access points where the user device 100 has connected with previously via its wireless transceiver 103, at points in time when the user device 100 was in the respective vicinity of these access points. As a result of the previous connection with these access points, the active probing module 101 has memorized certain information on these access points in access point memory 102. The memorized information at least contains an identification of the access point, e.g. the SSID thereof, an indication of the location of the access point, e.g. the cellular ID or ID of the cellular tower where user device 100 was connected to at the point in time connection was established with the access point, and eventual additional information such as the IP address of the access point, credentials like the security code used to establish connection with the access point, etc.

At a point in time where connection is established with an access point, e.g. AP3, the active probing module 101 hence consults the location determination unit 104 to receive an indication of the location of the user device 100 at that point in time. The location determination unit 104 may for instance be the unit in user device 100 that receives and memorizes the ID of the cellular tower where the user device 100 is connected to. This cellular ID will be delivered in return to the active probing module 101 as is indicated by arrow 111 in Fig. 1. The active probing module 101 thereupon stores an identification of the access point AP3 together with the cellular ID of cell 152, i.e. LOC2, in the list of associated access points 121 that is memorized in access point memory 102. Similarly, as is indicated by arrow 112 in Fig. 1 and as a result of previously established connections with access points 161, 162, 164 and 165, the active probing module 101 has memorized access point AP1 together with its location LOC1, access point AP2 together with its location LOC1, access point AP4 together with its location LOC 3 and access point AP5 together with its location LOC3. Herein, LOC1 represents the cellular ID of cell 151 and LOC3 represents the cellular ID of cell 153.

The active probing module 101 of user device 100 further has the task to regularly.broadcast probe request messages in order to determine which access points are available for WiFi connectivity and/or to determine if access points with a stronger signal are available when user device 100 is already WiFi connected. In order to generate a probe request message, the active probing module 101 consults the location correlation module 105, as is indicated by arrow 115 in Fig. 5. The location correlation module in turn consults the location determination unit 104 as well as the access point memory 102 and compares the current location of user device 100, obtained from location determination unit 104, with the location information stored in relation to the associated access points AP1 - AP5 in access point memory 102. This is indicated by arrows 113 and 114 in Fig. 1. The location correlation unit 105 selects the access point identifiers of those access points whose stored location corresponds with the current location of the user device 100. Thus, if user device 100 is within cell 153, the location determination unit 104 will inform the location correlator 105 that the current location is LOC3, i.e. the cellular ID of the cell 153. The location correlator 105 will correlate the current location LOC3 with the location information contained in access point memory 102, more particularly in list 121, and conclude therefrom that the locations of access points AP4 and AP5 match with the current location LOC3. The location correlation unit 105 shall inform the active probing module 101 that AP4 and AP5 are nearby access points, and active probing module 101 shall contain only the identifiers AP4 and AP5 in the probe request message it generates. The probe request message is thereafter delivered to wireless transceiver 103 for being broadcasted on all WiFi channels by transceiver 103. The access point identifiers AP1, AP2 and AP3 are not contained in the broadcasted probe request message because their respective memorized locations do not coincide with the current location LOC3 of the user device 100.

In reply to the probe request message broadcasted by wireless transceiver 103, the WiFi access points 164 and 165 respond with a probe response message to advertise their presence and invite user device 100 to establish a connection. The user device 100 automatically establishes connection with the access point with strongest signal or may establish connection with the access point of preference of the user. Once connection is established with an access point, the active probing module 101 shall update the information stored in relation to that access point in access point memory 102.

In the embodiment described here above with reference to Fig. 1, the location determination unit 104 relies on cellular tower identifiers as a coarse location indicator for user device 100 and access points AP1 - AP5. When user device 100 connects to a new WiFi access point, active probing module 101 stores the connection information, e.g., SSID, credentials, IP address, etc. on the user device 100, more particularly in access point memory 102. Along with this information, the cellular IDs that are perceived at the respective locations where the connection is established with the access points are stored. Thus, after initiating a WiFi connection to a new access point for the first time, a scan for nearby cellular towers may be initiated the results thereof are stored together with the access point data. It is noticed that more than one cellular ID may be stored as location indicator for a single access point as the cells of a cellular network typically overlap and the user device 100 may reside at a location that is covered by plural cellular towers at a point in time it establishes connectivity with a WiFi access point. By comparing the ID of the cell tower the user device 100 is currently connected to with the cell IDs stored for each associated access point, i.e. access point where connection was established with previously, user device 100 can send probe requests only for those access points that are nearby, i.e. in range of the same cell tower as the user device 100. The active probing this way is made more efficient, i.e. less power consuming because less data is contained in the probe requests, and less privacy invasive since no data is advertised on associated access points located outside the cell where the user device is currently located.

It is noticed that user device 100 may for instance be a mobile phone or smartphone in the embodiment illustrated by Fig. 1. Such mobile phone or smartphone typically maintain a continuous cellular connection. Hence the ID of the cell tower the user device 100 is currently connected to can be reused by the location correlation unit 105 and active probing module 101 and no additional cellular scanning for active WiFi probing is required.

In an alternative embodiment, the location determination unit may rely on other localization techniques at hand, such as for instance GPS or Bluetooth beacons. In such embodiments, a location coordinate or semantic location description of the user device's location at the point in time it first establishes connectivity with a WiFi access point is stored along with the WiFi access point information. Similar to the above described first embodiment, the user device's current location is compared with the location information of the associated access points stored on the user device and only in case of a location match, i.e. identical locations or locations within a certain maximum distance, the access point identifier will be contained in a probe request that is broadcasted.

Embodiments of the present invention may also be able to deactivate active probing based on the user device's location. Thereto, a blacklist of given locations either expressed as cellular tower identifiers, GPS coordinates, semantic location descriptions, etc., may be maintained in the user device to prevent active probing at certain locations like airports or hotels. In such crowded public places, privacy might play a more important role and the user may want to prevent his/her device to leak any data at all on associated access points through active probing.

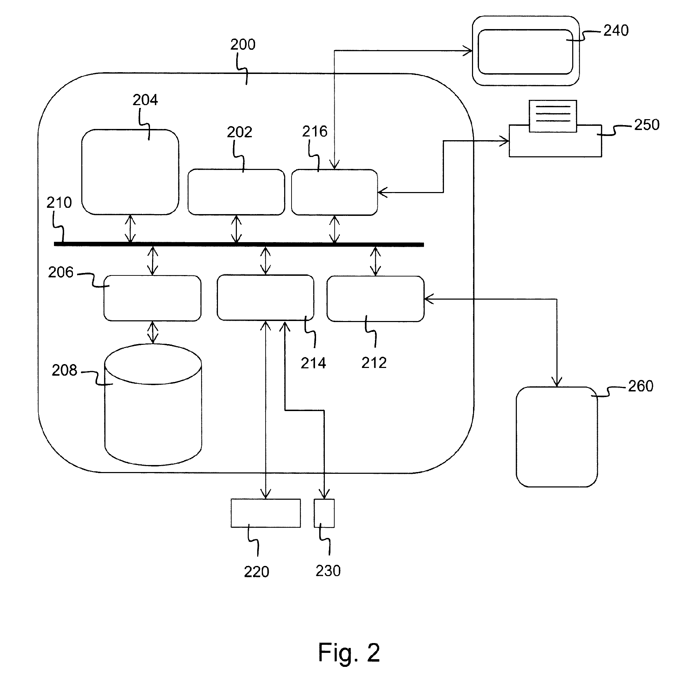

Fig. 2 shows a suitable computing system 200 for hosting certain components of the location based active probing underlying the present invention. The active probing module 101 and location correlation unit 105 of the embodiment drawn in Fig. 1 for instance may be implemented in software that is executed on a computing system like 200. Computing system 200 may in general be formed as a suitable general purpose computer and comprise a bus 210, a processor 202, a local memory 204, one or more optional input interfaces 214, one or more optional output interfaces 216, a communication interface 212, a storage element interface 206 and one or more storage elements 208. Bus 210 may comprise one or more conductors that permit communication among the components of the computing system. Processor 202 may include any type of conventional processor or microprocessor that interprets and executes programming instructions. Local memory 204 may include a random access memory (RAM) or another type of dynamic storage device that stores information and instructions for execution by processor 202 and/or a read only memory (ROM) or another type of static storage device that stores static information and instructions for use by processor 204. Input interface 214 may comprise one or more conventional mechanisms that permit an operator or user to input information to the computing device 200, such as a keyboard 220, a mouse 230, a pen, voice recognition and/or biometric mechanism, etc. Output interface 216 may comprise one or more conventional mechanisms that output information to the operator or user, such as a display 240, a printer 250, a speaker, etc. Communication interface 212 may comprise any transceiver-like mechanism such as for example two 1 Gb Ethernet interfaces that enable computing system 200 to communicate with other devices and/or systems, for example mechanisms for communicating with one or more other computing systems. The communication interface 212 of computing system 200 may be connected to such another computing system 260 by means of a local area network (LAN) or a wide area network (WAN, such as for example the internet, in which case the other computing system may for example comprise a suitable web server. Storage element interface 206 may comprise a storage interface such as for example a Serial Advanced Technology Attachment (SATA) interface or a Small Computer System Interface (SCSI) for connecting bus 210 to one or more storage elements 208, such as one or more local disks, for example 1TB SATA disk drives, and control the reading and writing of data to and/or from these storage elements 208. Although the storage element 208 above is described as a local disk, in general any other suitable computer-readable media such as a removable magnetic disk, optical storage media such as a CD or DVD, -ROM disk, solid state drives, flash memory cards, ... could be used.

Certain steps executed in the method for wireless communication with location based active probing according to the present invention, illustrated by the above embodiments, may be implemented as programming instructions stored in local memory 204 of the computing system 200 for execution by its processor 202. Alternatively the instructions may be stored on the storage element 208 or be accessible from another computing system through the communication interface 212.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A wireless communication device (100) comprising:
- an active probing module (101) configured to memorize a list (121) of identifiers of access points (AP1, AP2, AP3, AP4, AP5) whereto said wireless communication device (100) previously established connection;
- a wireless interface (103) configured to regularly broadcast probe request messages containing identifiers of access points out of said list (121) memorized by said active probing module (101); and
- a location determination unit (104) configured to determine a current location (LOC3) of said wireless communication device (100),
**CHARACTERIZED IN THAT**
- said active probing module (101) is further configured to memorize in relation to each access point (AP1, AP2, AP3, AP4, AP5) in said list (121) location information (LOC1, LOC1, LOC2, LOC3, LOC3) indicative for the location of said access point (AP1, AP2, AP3, AP4, AP5);
- said wireless communication device (100) further comprises a location correlator (105) adapted to compare said current location of said wireless communication device (100) with said location information (LOC1, LOC1, LOC2, LOC3, LOC3) memorized; and
- said active probing module (101) is further adapted to contain in said probe request messages only identifiers of access points (AP4, AP5) out of said list (121) whose location (LOC3, LOC3) is within a certain limit of said current location (LOC3) of said wireless communication device (100).

2. A wireless communication device (100) according to claim 1, wherein:
- said location information (LOC1, LOC1, LOC2, LOC3, LOC3) indicative for the location of said access point (AP1, AP2, AP3, AP4, AP5) corresponds with a cell identifier of a cell (151, 152, 153) in a wireless cellular network wherein said wireless communication device (100) was present at the time said connection was established; and
- said current location (LOC3) of said wireless communication device (100) corresponds with a cell identifier of a cell (153) in said wireless cellular network wherein said wireless communication device (100) is currently present.

3. A wireless communication device (100) according to claim 1, wherein said location information indicative for the location of said access point (AP1, AP2, AP3, AP4, AP5) and/or said current location are/is one or more of:
- Global Positioning System or GPS coordinates;
- Galileo coordinates;
- GLObal'naya NAvigatsionnaya Sputnikovaya Sistema or GLONASS coordinates;
- Beidou coordinates;
- a Bluetooth beacon; and
- triangulation based coordinates.

4. A wireless communication device (100) according to claim 1, wherein:
- said active probing module (101) is further adapted to memorize a blacklist of locations; and
- said active probing module,(101) is further adapted to interrupt broadcasting said probe request messages whenever said current location of said wireless communication device corresponds to a location within said blacklist.

5. A wireless communication device (100) according to claim 1, wherein:
- said active probing module (101) is further adapted to memorize a white list of locations; and
- said active probing module (101) is further adapted to broadcast a generic probe request message whenever said current location of said wireless communication device corresponds to a location within said white list, said generic probe request message containing no identifiers of access points to enable any access point to respond.

6. A wireless communication device (100) according to claim 1, further comprising:
- a passive scanning module configured to listen to signalling broadcasted by nearby access points to advertise their presence; and
- said passive scanning module is further configured to memorize one or more location;
- said passive scanning module further being configured to enable or disable listening to said signalling when said current location of said wireless communication device corresponds to a location memorized.

7. A wireless communication device (100) according to claim 1, wherein said certain limit corresponds to a predetermined distance threshold.

8. A wireless communication device (100) according to claim 1, wherein said certain limit corresponds to the same cell in a wireless cellular network wherein said wireless communication device is present.

9. A wireless communication method comprising:
- memorizing a list (121) of identifiers of access points (AP1, AP2, AP3, AP4, AP5) whereto a wireless communication device (100) already established connection;
- regularly broadcasting probe request messages containing identifiers of access points out of said list (121) memorized by said wireless communication device (100); and
- determining a current location (LOC3) of said wireless communication device (100),
**CHARACTERIZED IN THAT** said method further comprises:
- memorizing in relation to each access point (AP1, AP2, AP3, AP4, AP5) in said list (121) location information (LOC1, LOC1, LOC2, LOC3, LOC3) indicative for the location of said access point (AP1, AP2, AP3, AP4, AP5);
- comparing said current location (LOC3) of said wireless communication device (100) with said location information (LOC1, LOC1, LOC2, LOC3, LOC3) memorized; and
- containing in said probe request messages only identifiers of access points (AP4, AP5) out of said list (121) whose location (LOC3, LOC3) is within a certain limit of said current location (LOC3) of said wireless communication device (100).
